# EUROPÄISCHE PATENTSCHRIFT

(11) **EP 2 248 615 B1**
(45) Veröffentlichungstag und Bekanntmachung des Hinweises auf die Patenterteilung: **13.11.2013**
(21) Anmeldenummer: 10004761.2
(22) Anmeldetag: 05.05.2010
(51) Int. Cl.: B22C 9/06, B29C 33/38

(54) **Temperierbares Werkzeug und Verwendung desselben**
Temperable tool and use of the same
Outil pouvant être tempéré et utilisation de celui-ci

(30) Priorität: 05.05.2009 DE 102009020011; 06.11.2009 DE 102009052213
(43) Veröffentlichungstag der Anmeldung: 10.11.2010
(73) Patentinhaber: Meissner Formentechnologie GmbH, 79585 Steinen (DE)
(72) Erfinder: Meissner, Christoph, 79669 Zell i. W. (DE); Haselwander, Jürgen, 79664 Wehr (DE)
(74) Vertreter: Fischer, Matthias

(56) Entgegenhaltungen:
- EP-A2- 0 412 891
- WO-A2-2007/038385
- WO-A2-2009/043192
- GB-A- 2 346 107
- JP-A- 63 278 808
- US-A1- 2004 126 455
- US-A1- 2008 003 323

## Beschreibung

Die vorliegende Erfindung betrifft ein temperierbares Werkzeug zur Herstellung von Formteilen und die Verwendung des Werkzeugs, zur Herstellung von Formteilen.

Ein derartiges Werkzeug findet allgemein in allen Bereichen, in denen fließfähige Formstoffe in einer Form erstarren, Verwendung. Es sind temperierbare Werkzeuge bekannt, die einstückig aus Stahl oder Aluminium gefertigt werden, wobei in der Fachliteratur Produktionsverfahren beschrieben werden, in denen temperierbare Werkzeuge zum Einsatz kommen, wie z. B. Schäumen, Kernformen oder Spritzgießen.

Als nachteilig bei diesen bekannten Werkzeugen werden z. B. das hohe Eigengewicht sowie aufwändige Reparatur- und / oder Änderungsverfahren bei Stahlwerkzeugen empfunden. Nicht zufriedenstellend ist bisher das Problem des Wärmeübergangs an Reparaturstellen gelöst. Auch sehr kleine Luftspalte zwischen eingesetzten Reparatur- oder Korrektureinsätzen aus Stahl und dem Stahlwerkzeug stören und beeinflussen den Wärmeübergang negativ. Einen weiteren Nachteil stellen bei den genannten Stahlwerkzeugen die hohen Herstellungskosten aufgrund des teuren Rohstoffs dar. Hier kommen in der Regel hochlegierte vergütete Warmarbeitsstähle zum Einsatz. Diese wiederum bedingen einen hohen und kostenintensiven Bearbeitungsaufwand. Aluminiumwerkzeuge sind zwar vom Gewicht her leichter und einfacher zu handhaben. Sie sind jedoch u. a. wegen ihrer hohen Verschleißanfälligkeit ungünstig.

Die GB 2 346 107 beschreibt ein temperierbares Werkzeug, welches aus einem Grundkörper besteht, welcher in einer Ausführungsform aus einander berührenden Stahlkugeln besteht. Weiterhin weist dieses Werkzeug ein Formteilbett und eine zwischen dem Formteilbett und dem Grundkörper angeordnete Wärme leitende Zwischenschicht auf.

Aus der JP 63 278808 A ist eine Harzgussform bekannt, bei welcher die Oberfläche einer Grundform und die innere Oberfläche einer Kernbox mit einem Trennmittel wie z. B. Wachs beschichtet sind.

Die US 2004/126455 A1 lehrt einen Einsatz für eine Gussform, bei welchem formschlüssige Verankerungen einzelner Schichten in einem Werkzeug verwendet werden.

Es ist zunächst eine Aufgabe der Erfindung, ein temperierbares Werkzeug vorzuschlagen, mit dem die aus dem Stand der Technik bekannten Nachteile vermieden oder zumindest stark verringert werden.

Die Aufgabe wird gelöst mit einem temperierbaren Werkzeug zur Herstellung von Formteilen, welches durch einen Grundträger, ein Formteilbett und eine zwischen dem Grundträger und dem Formteilbett angeordnete Verbindungsschicht aus wärmleitfähigem Kunststoff gekennzeichnet ist, wobei die Verbindungsschicht (4) und das Formteilbett (6) lösbar miteinander verbinden sind. Gegenüber dem aus dem Stand der Technik bekannten klassischen einteiligen Stahlwerkzeug mit dort eingebrachten passungsgenauen Anschlüssen für Heizung etc. bietet die erfindungsgemäße Werkzeuganordnung viele Vorteile, z. B. die Möglichkeit, das Formteilbett aus einem anderen, z. B. billigeren, leichter zu bearbeitenden und zu verändernden Werkstoff zu fertigen als den Grundträger.

In einer vorteilhaften Ausbildung der Erfindung ist das Werkzeug **dadurch gekennzeichnet, dass** der Grundträger aus Metall und dass das Formteilbett aus Kunststoff ausgebildet ist. Grundträger und Formteilbett können aus Metall gebildet sein.

Die Gewichtsreduktion des Formteilbetts gegenüber Stahlwerkzeugen spricht jedoch für sich. Das spezifische Gewicht von Kunststoffen ist wesentlich geringer als das von Stahl, wodurch die Handhabung des erfindungsgemäßen Werkzeugs wesentlich erleichtert und vereinfacht und auch eine Verminderung der Gefahr und Kosten beim Transport von Schwerlasten erreicht wird. Vorteilhaft zeigt sich auch die Reduzierung der Herstellungskosten für das Werkzeug, aufgrund der möglichen schnelleren Bearbeitbarkeit. Schließlich stellen die einfache und kostengünstige Reparatur- und Änderungsmöglichkeit einen der größten Vorteile des erfindungsgemäßen Werkzeugs dar. Die bei herkömmlichen Stahl- oder Aluminiumwerkzeugen bei Reparaturen aufgrund des gestörten Wärmeübergangs in Reparaturzonen auftretenden Schwierigkeiten fallen bei der vorteilhaften Weiterbildung des erfindungsgemäßen Werkzeugs praktisch weg. Es gibt keine Probleme beim Wärmeübergang an reparierten oder geänderten Bereichen des erfindungsgemäßen Werkzeugs, da eine Modifikation des Formteilbetts aus Kunststoff praktisch ohne, den Wärmeübergang behindernde, Luftspalte möglich ist. Bei aus dem Stand der Technik bekannten einteiligen Stahlwerkzeugen, wird in der Regel ein größerer Teil des Formteilbetts entfernt und durch einen modifizierten Teil ersetzt. Die hierdurch beim Wiedereinsatz entstehenden den Wärmeübergang störenden Luftspalte mit allen ihren Folgeproblemen werden beim erfindungsgemäßen Werkzeug vorteilhafterweise vermieden. Ein weiterer großer Vorteil des erfindungsgemäßen Werkzeugs besteht darin, dass es für kleine bis mittlere Stückzahlen erhebliche Kostenvorteile ermöglicht. Das Werkzeug mit Formteilbett aus Kunststoff ist einerseits erheblich günstiger als ein vergleichbares Stahlwerkzeug. Temperierte Stahlwerkzeuge eignen sich wegen der hohen Herstellungskosten nicht für kleine bis mittlere Stückzahlen.

Andererseits kann man, wenn gewünscht, auch bereits in der Pilotphase mit dem endgültigen Werkzeug arbeiten, da ein späterer Materialumstieg nicht mehr erforderlich ist. Hierzu soll zur Erläuterung ein konkretes Beispiel dienen: Seit geraumer Zeit ist im Gießereibereich das anorganische Kernherstellungsverfahren im Einsatz. Das sogenannte Anorganikverfahren gilt als umweltfreundlich. Nachteilig ist jedoch die Notwendigkeit, dass man bisher heiße Werkzeuge aus Stahl einsetzen muss.

Wegen den hohen Kosten von Stahlwerkzeugen werden derzeit Kleinserien, Prototypen- oder Vorserienteile in nicht-temperierten Kunststoffwerkzeugen mit (nicht umweltfreundlichen) organischen Bindersystemen hergestellt. Der spätere erforderliche Umstieg auf die "heiße" Serie birgt enorme Risiken und Unsicherheiten und erzeugt hohe Kosten und Zeitverzug.

Das erfindungsgemäße Werkzeug bietet aufgrund seines neuen Werkzeugkonzepts den großen Vorteil, dass das Herstellen von Prototypen und Vorserien direkt im späteren Serien-Kernherstellungsverfahren erfolgen kann. Das erfindungemäße neue Werkzeugkonzept ermöglicht einer Vielzahl von potentiellen Gießereien den Einsatz von umweltfreundlichen anorganischen Bindersystemen auch bei kleinen bis mittleren Stückzahlen.

In der Ausbildung der Erfindung ist das Werkzeug **dadurch gekennzeichnet, dass** die Verbindungsschicht und das Formteilbett lösbar miteinander verbunden sind. Dadurch ergibt sich erfindungsgemäß eine Reihe von Vorteilen. Bei dieser Variante kann z. B. das Formteilbett als Wechseleinsatz gestaltet werden. Während der beispielsweise metallische Grundträger und die Kunststoff-Verbindungsschicht fest miteinander verbunden sind, lässt sich das Formbett sich von der Zwischenschicht lösen. Auch der Austausch des Formteilbetts, der beispielweise aufgrund des Verschleißes erforderlich ist, ist gegeben. Formteilbetten von Prototypenwerkzeugen können nach Bewährung im Pilotbetrieb durch kostengünstige Serien-Formteilbetten (aus Kunststoff oder Metall) ersetzt werden, ohne dass auch - wie bisher - das gesamte Werkzeug, wie Grundträger mit Heizung, Anschlüssen etc. neu angefertigt werden muss. Die Austauschbarkeit des Formteilbetts hat sich als ganz entscheidender Vorteil erwiesen. Hierdurch werden enorme Kosten eingespart. Die Werkzeugstillstands- oder Ausfallzeit wird verringert. Der Herstellungsprozess von Formteilen wird weniger behindert. Das Formteilbett wird nach dem Aufsetzen auf die Verbindungsschicht an bestimmten Stellen mit üblichen Befestigungsmitteln verankert.

(In der vorliegenden Beschreibung sind - sofern verwendet - "Formteilbett" und "Formschale" synonym und als funktionsmäßig gleichbedeutend zu sehen.)

Des Weiteren sind folgende Vorteile dieser Ausbildung der Erfindung hervorzuheben: Bei Änderung, Verschleiß oder Neukonstruktion der Formteilkontur des Formteilbetts muss nur das Formteilbett selbst ausgetauscht werden und nicht das gesamte Werkzeug mit Grundträger und Verbindungsschicht und Formteilbett. Die Anfertigung eines neuen oder geänderten Formteilbetts kann bereits erfolgen, während sich das Formteilbett mit der zu ändernden Geometrie noch in der Produktion befindet. Der beispielsweise metallische Grundkörper mit der Verbindungsschicht, kann mit unterschiedlichen Formteilbetten (=unterschiedliche Geometrie auf der Formteilseite) kombiniert und bestückt werden. Das Gesamtwerkzeug hat eine deutlich höhere Verfügbarkeit für die Produktion während einer Änderungsphase, d. h. das temperierbare Werkzeug muss für die Änderung des Formteilbetts nicht so lange außer Funktion gesetzt werden. Außerdem können Ersatzteil-Formteilbetten kostengünstig bereitgestellt werden. Ein besonderer Vorteil besteht darin, dass sich die Kosten für eine Konturänderung des Formteilbetts auf die Änderung oder Neuanfertigung des Formteilbetts reduzieren. Bisher war es nur möglich, bei erforderlichen Änderungen das gesamte vorhandene temperierbare Werkzeug sehr kostenaufwändig zu bearbeiten, es zu verwerfen oder ein vollständig neues Werkzeug herzustellen.

In einer vorteilhaften Ausbildung der Erfindung ist das Werkzeug **dadurch gekennzeichnet, dass** die Verbindungsschicht Vorsprünge aufweist, welche den Grundträger und das Formteilbett formschlüssig miteinander verbinden. Damit lässt sich vorteilhafterweise eine zusätzliche Stabilisierung der Verbindung des Grundträgers, beispielsweise aus Metall, mit dem Formteilbett, beispielsweise aus Kunststoff erzielen.

In einer weiteren vorteilhaften Ausbildung der Erfindung ist das Werkzeug **dadurch gekennzeichnet, dass** der Grundträger eine Heizvorrichtung aufweist. Dadurch ergibt sich der Vorteil, dass ggf. erforderliche Veränderungen im Formteilbett nicht durch eine dort angeordnete Heizvorrichtung behindert oder erschwert werden.

In einer anderen vorteilhaften Ausbildung der Erfindung ist das Werkzeug **dadurch gekennzeichnet, dass** die Heizvorrichtung eine Ölheizung ist.

In einer weiteren vorteilhaften Ausbildung der Erfindung ist das Werkzeug **dadurch gekennzeichnet, dass** die Heizvorrichtung eine elektrische Heizung ist.

In einer weiteren vorteilhaften Ausbildung der Erfindung ist das Werkzeug **dadurch gekennzeichnet, dass** bei einem Formteilbett aus Kunststoff der Kunststoff ein wärmebeständiges Epoxidharz, welches vorzugsweise metallischen Füllstoff zur Verbesserung der Wärmeleitfähigkeit enthält ist.

In einer weiteren vorteilhaften Ausbildung der Erfindung ist das Werkzeug **dadurch gekennzeichnet, dass** der Kunststoff der Verbindungsschicht ein wärmebeständiges Epoxidharz, welches vorzugsweise metallischen Füllstoff zur Verbesserung der Wärmeleitfähigkeit enthält ist.

In einer weiteren vorteilhaften Ausbildung der Erfindung ist das Werkzeug **dadurch gekennzeichnet, dass** der Kunststoff der Verbindungsschicht ein bei Erwärmung an Volumen zunehmender Kunststoff, insbesondere ein Silikon ist. Diese Gestaltung erleichtert die Handhabung des Formteilbetts beim Einsatz auf die Verbindungsschicht und verbessert den Wärmeübergang.

Ein Werkzeugträgerrahmen zur Aufnahme eines temperierbaren Werkzeugs ist dadurch gekennzeichnet dass er wenigstens eine Aufnahme für ein erfindungsgemäßes Werkzeug nach einem der Ansprüche 1 bis 8 aufweist. Hierdurch ergibt sich der Vorteil einer Aufgabentrennung zwischen dem eigentlichen temperierbaren Werkzeug und dem Rahmen, welcher z. B. die Schnittstellen bzw. Zuleitungen zur Heizvorrichtung tragen kann. Es ergibt sich eine schnelle und umkomplizierte Werkzeugwechsel- sowie Werkzeugkombinationsmöglichkeit.

In weiteren Ausbildungen ist der Werkzeugträgerrahmen **dadurch gekennzeichnet, dass** er zwei, vier oder mehr Aufnahmen für ein Werkzeug aufweist. Hierdurch ergeben sich zusätzliche Kombinationsmöglichkeiten.

Zum besseren Verständnis der Erfindung und um zu zeigen, wie diese ausgeführt werden kann, wird sie unter Zuhilfenahme einer Zeichnung im Folgenden kurz erläutert.
- Fig. 1: zeigt schematisch im Querschnitt einen Ausschnitt eines erfindungsgemäßen Werkzeugs.
- Fig. 2: zeigt schematisch einen in Perspektive dargestellten Abschnitt einer Hälfte eines erfindungsgemäßen Werkzeugs.

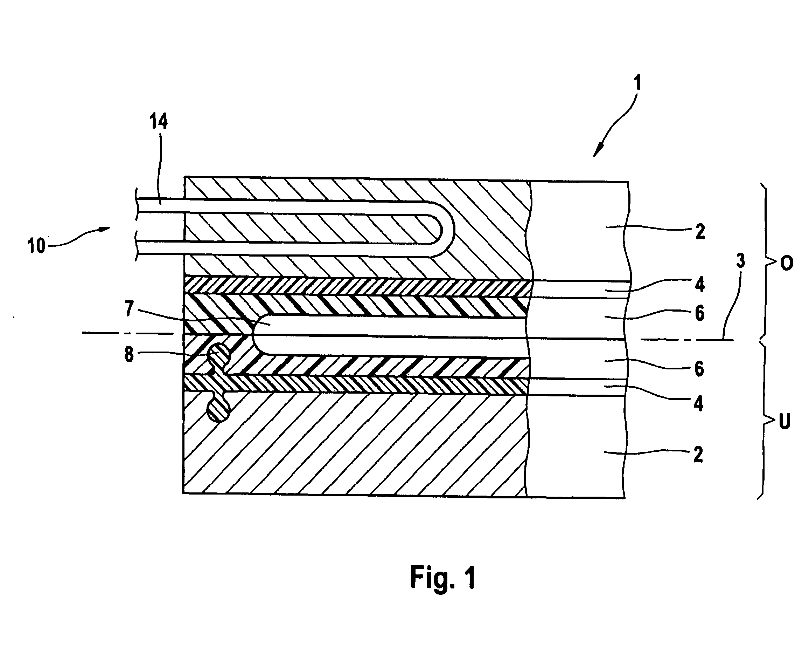

In Fig. 1 ist beispielhaft ein Ausschnitt eines erfindungsgemäßen temperierbaren Werkzeugs 1 gezeigt, welches aus einer oberen und einer unteren Werkzeughälfte O und U zusammengesetzt ist, welche an einer Mittellinie 3 aneinander anliegen. Beide Hälften O und U haben einen über eine Heizvorrichtung 10 mittels beispielsweise Öl beheizbaren Grundträger 2 und ein Formteilbett 6 für ein beispielhaft angegebenes Formteil 7, z. B. ein Formkern für ein Gussstück, hier in beliebiger länglicher Form gewählt. Der Grundträger 2, beispielsweise aus Metall, z. B. Stahl oder Aluminium, und das Formteilbett 6, beispielsweise aus Kunststoff, sind über eine Verbindungsschicht 4 aus wärmetransparentem Kunststoff miteinander verbunden. Die Verbindungsschicht 4 wird zwischen die zueinander ausgerichteten Grundträger 2 und Formteilbett 6 gespritzt oder gegossen und verklebt diese beiden Bauteile unter Bildung einer ungehinderten Wärmeübergangsmöglichkeit zwischen dem Grundkörper 2, der Verbindungsschicht 4 und dem Formteilbett 6 beispielsweise fest oder lösbar miteinander. Die Verbindungsschicht 4 kann sich bei einer vorteilhaften Weiterbildung durch zusätzliche Vorsprünge 8 zur Bildung einer zusätzlichen formschlüssigen Verbindung von Grundträger und Formteilbett in den Grundträger 2 und in das Formteilbett 6 erstrecken.

Soll das Formteilbett in einer vorteilhaften Ausbildung der Erfindung als Wechselwerkzeug verwendet werden, entfallen derartige Vorsprünge oder sie sind so zu gestalten, dass sie das Entfernen eines lösbaren Formteilbetts von der Verbindungsschicht nicht behindern.

Das in Fig. 1 im Prinzip gezeigte Werkzeug 1 dient zur Herstellung von Formkernen, wie z. B. Formteil 7, im Anorganikverfahren.

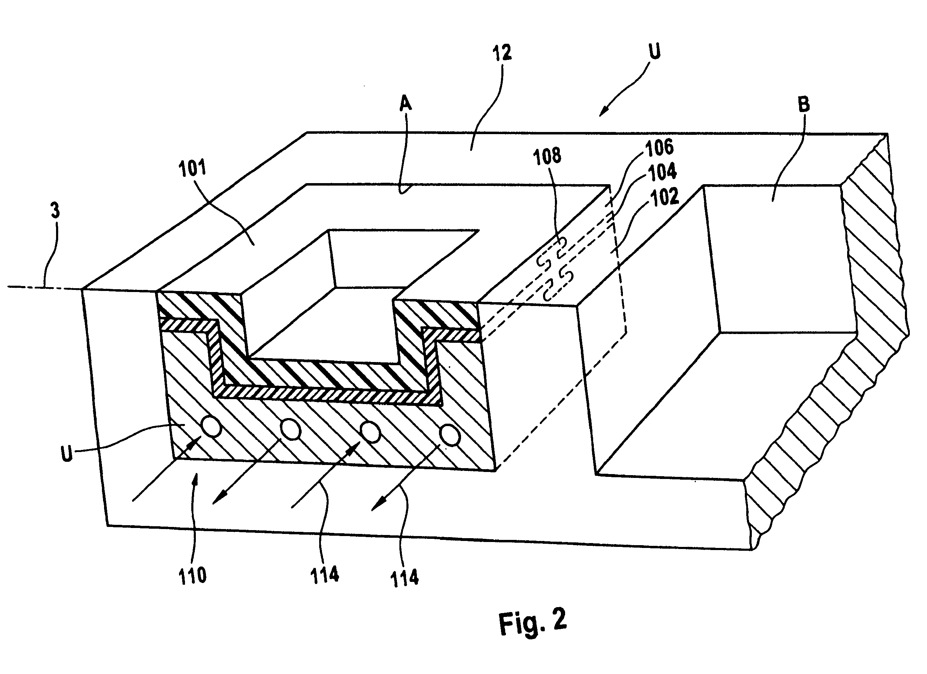

In Fig. 2 ist perspektivisch eine andere Form eines Abschnitts einer Hälfte U eines erfindungsgemäßen Werkzeugs 101 gezeigt. Das Werkzeug 101 besteht - analog zum Werkzeug 1 - aus einem Grundträger 102, einem Formbett 106 und einer Verbindungsschicht 104. Das Formbett 106 weist eine Ausnehmung zur Aufnahme eines darin herzustellenden (nicht gezeigten) Formteils 107 auf. Beispielhaft für eine größere Anzahl ist ein Vorsprung 108 zur zusätzlichen formschlüssigen Verbindung von Grundträger 102 und Formteilbett 106 angedeutet.

Auch hier ist darauf zu achten, dass, wenn das Formteilbett als Wechselwerkzeug verwendet wird, derartige Vorsprünge 108 entfallen oder so zu gestalten sind, dass sie das Entfernen eines lösbaren Formteilbetts von der Verbindungsschicht nicht behindern.

Mit Pfeilen 114 sind Zu- und Abflüsse einer Heizvorrichtung 110 angedeutet.

Nur schemenhaft und schematisch ist ein Werkzeugträgerrahmen 12 mit Ausnehmungen zur Aufnahme von Werkzeugen A und B angedeutet. Hierbei können wie gezeigt zwei Ausnehmungen oder auch mehr Ausnehmungen A, B angeordnet sein.

Das Formteilbett 6, 106 besteht in einer vorteilhaften Ausbildung der Erfindung aus einem vorzugsweise verschleißfesten, temperaturbeständigen und beheizbaren Kunststoff, z. B. einem wärmebeständigen Epoxidharz. In einer vorteilhaften Weiterbildung der Erfindung, enthält das Epoxidharz metallischen Füllstoff zur Verbesserung der Wärmeleitfähigkeit.

Die Verbindungsschicht 4, 104 besteht aus wärmeleitfähigem Kunststoff, z. B. einem wärmebeständigen Epoxidharz, der über den beheizten Grundträger 2, 102 aus Metall beheizt wird. In einer vorteilhaften Weiterbildung der Erfindung, enthält auch dieses Epoxidharz metallischen Füllstoff zur Verbesserung der Wärmeleitfähigkeit.

Das erfindungsgemäße Werkzeug kann auch derart ausgebildet sein, dass der Kunststoff der Verbindungsschicht 4 ein bei Erwärmung an Volumen zunehmender Kunststoff, insbesondere ein Silikon ist.

Das Werkzeug 1, 101 wird mit temperierten Fluiden oder elektrischer Energie einer nicht weiter beschriebenen (nicht gezeigten) Heizvorrichtung 110 auf die erforderliche Betriebstemperatur erwärmt. Dabei verhindert der Werkstoffverbund der Komponenten 2, 4, und 6, bzw. 102, 104 und 106 ein unkontrolliertes Verformen des vorzugsweise ausdehnungsresistenten Kunststoffs des Formteilbetts 6, 106.

Bei einer vorteilhaften Ausbildung der Erfindung als neue Kombination sind ein wärmebeständiger, beheizbarer Kunststoff (Formteilbett) und ein beheizbarer Grundträger aus Metall über eine beheizbare Verbindungsschicht aus wärmeleitfähigem Kunststoff verbunden. Durch den Werkstoffverbund wird eine ggf. vorhandene unkontrollierbare Verformung des Kunststoffs des Formteilbetts reproduzierbar kompensiert. Durch diese vorteilhafte Kombination der oben genannten Werkstoffe entsteht die Möglichkeit, ein wärmebeständiges und beheiztes Produktionswerkzeug in Kunststoff einzusetzen. Dadurch werden die Vorteile des Werkstoffs Kunststoff in neuen Produktionsbereichen einsetzbar, in denen bisher nur reine Metallwerkzeuge verwendet werden konnten.

### Bezugszeichen

- A: Ausnehmung
- B: Ausnehmung
- O: Werkzeughälfte
- U: Werkzeughälfte
- 1, 101: Werkzeug
- 2, 102: Grundträger
- 3: Mittelinie
- 4, 104: Verbindungsschicht
- 6, 106: Formteilbett
- 7: Formteil
- 8, 108: Vorsprünge
- 10, 110: Heizvorrichtung
- 12: Aufnahme
- 14,114: Kanal

## Patentansprüche

1. Temperierbares Werkzeug zur Herstellung von Formteilen, **gekennzeichnet durch** folgende Merkmale:
a) einen Grundträger (2),
b) ein Formteilbett (6) und
c) eine zwischen dem Grundträger (2) und dem Formteilbett (6) angeordnete Verbindungsschicht (4) aus wärmeleitfähigem Kunststoff, wobei
d) die Verbindungsschicht (4) und das Formteilbett (6) lösbar miteinander verbunden sind.

2. Werkzeug nach Anspruch 1, **dadurch gekennzeichnet, dass** der Grundträger aus Metall und dass das Formteilbett aus Kunststoff ausgebildet ist.

3. Werkzeug nach Anspruch 1 2, **dadurch gekennzeichnet, dass** die Verbindungsschicht (4) Vorsprünge (8) aufweist, welche den Grundträger (2) und das Formteilbett (6) formschlüssig miteinander verbinden.

4. Werkzeug nach Anspruch 1, 2 oder 3, **dadurch gekennzeichnet, dass** der Grundträger (2) eine Heizvorrichtung (10) aufweist.

5. Werkzeug nach Anspruch 4, **dadurch gekennzeichnet, dass** die Heizvorrichtung (10) eine Ölheizung ist.

6. Werkzeug nach Anspruch 4, **dadurch gekennzeichnet, dass** die Heizvorrichtung (10) eine elektrische Heizung ist.

7. Werkzeug nach einem der Ansprüche 2 bis 6, **dadurch gekennzeichnet, dass** der Kunststoff des Formteilbetts (6) ein wärmebeständiges Epoxidharz, welches vorzugsweise metallischen Füllstoff zur Verbesserung der Wärmeleitfähigkeit enthält ist.

8. Werkzeug nach einem der Ansprüche 1 bis 7, **dadurch gekennzeichnet, dass** der Kunststoff der Verbindungsschicht (4) ein wärmebeständiges Epoxidharz, welches vorzugsweise metallischen Füllstoff zur Verbesserung der Wärmeleitfähigkeit enthält, ist.

9. Werkzeug nach einem der Ansprüche 1 bis 7, **dadurch gekennzeichnet, dass** der Kunststoff der Verbindungsschicht (4) ein bei Erwärmung an Volumen zunehmender Kunststoff, insbesondere ein Silikon ist.

10. Verwendung eines temperierbaren Werkzeugs (1) nach einem der Ansprüche 1 bis 9, zum Herstellen von Formteilen (7).

## Claims

1. A heatable mould for producing mouldings, **characterized by** the following features:
a) a base support (2),
b) a moulding bed (6), and
c) a connecting layer (4) made of heat-conductive plastic disposed between the base support (2) and the moulding bed (6), wherein
d) the connecting layer (4) and the moulding bed (6) are detachably interconnected.

2. The mould as set forth in claim 1, **characterized in that** said base support is made of metal and that said moulding bed is made of plastic.

3. The mould as set forth in claim 1 or 2, **characterized in that** said connecting layer (4) comprises projections (8) positively interconnecting the base support (2) and the moulding bed (6).

4. The mould as set forth in claim 1, 2 or 3, **characterized in that** said base support (2) comprises a heater (10).

5. The mould as set forth in claim 4, **characterized in that** said heater (10) is an oil heater.

6. The mould as set forth in claim 4, **characterized in that** said heater (10) is an electric heater.

7. The mould as set forth in any of the claims 2 to 6, **characterized in that** said plastic of said moulding bed (6) is a heat-resistant epoxy resin, preferably containing a metallic filler to improve its thermal conductivity.

8. The mould as set forth in any of the claims 1 to 7, **characterized in that** said plastic of said connecting layer (4) is a heat-resistant epoxy resin, preferably containing a metallic filler to improve its thermal conductivity.

9. The mould as set forth in any of the claims 1 to 7, **characterized in that** said plastic of said connecting layer (4) is a plastic, particularly a silicone, the volume of which increases when heated.

10. Use of a heatable mould (1) for producing mouldings (7) as set forth in any of the claims 1 to 9.

## Revendications

1. Outil pouvant être tempéré pour la fabrication de pièces moulées **présentant les caractéristiques suivantes :**
a) Un support de base (2),
b) Un berceau pour pièces moulées (6) et
c) Une couche de liaison (4) en matière plastique conductrice de chaleur, placée entre le support de base (2) et le berceau pour pièces moulées (6) de telle manière que
d) la couche de liaison (4) et le berceau pour pièces moulées (6) sont reliés de manière amovible.

2. Outil selon la revendication 1, **caractérisé en ce que** le support de base se compose de métal et le berceau pour pièces moulées de matière plastique.

3. Outil selon la revendication 1 ou 2, **caractérisé en ce que** la couche de liaison (4) présente des saillies (8) qui relient le support de base (2) et le berceau pour pièces moulées (6) par assemblage de forme.

4. Outil selon la revendication 1, 2 ou 3, **caractérisé en ce que** le support de base (2) présente un dispositif de chauffage (10).

5. Outil selon la revendication 4, **caractérisé en ce que** le dispositif de chauffage (10) est un chauffage au fuel.

6. Outil selon la revendication 4, **caractérisé en ce que** le dispositif de chauffage (10) est un chauffage électrique.

7. Outil selon l'une des revendications 2 à 6, **caractérisé en ce que** la matière plastique du berceau pour pièces moulées (6) est une résine époxy thermorésistante qui, de préférence, contient un matériel de remplissage métallique pour améliorer la conductibilité thermique.

8. Outil selon l'une des revendications 1 à 7, **caractérisé en ce que** la matière plastique de la couche de liaison (4) est une résine époxy thermorésistante qui, de préférence, contient un matériel de remplissage métallique pour améliorer la conductibilité thermique.

9. Outil selon l'une des revendications 1 à 7, **caractérisé en ce que** la matière plastique de la couche de liaison (4) est un plastique augmentant de volume lorsqu'il est chauffé, en particulier une silicone.

10. Utilisation d'un outil pouvant être tempéré selon l'une des revendications 1 à 9 pour la fabrication de pièces moulées (7).
